# EUROPEAN PATENT APPLICATION

(11) **EP 1 670 171 A1**
(43) Date of publication of application: **14.06.2006**
(21) Application number: 04078358.1
(22) Date of filing: 10.12.2004
(51) Int. Cl.: H04L 9/00

(54) **Method and apparatus for a security system for wireless networks**

(71) Applicant: Tata Consultancy Services Limited, Mumbai 400001 (IN)
(72) Inventor: Pal, Arpan, Salt Lake, Kolkata 700091 (IN); Purushothaman, Balamuralidhar, Bangalore 560 066 (IN); Viswanath, Ganapathy, Bangalore 560 066 (IN); Reddy, Harish Thimma, Bangalore 560 066 (IN)
(74) Representative: Sharp, Alan Cooper

(57) **Abstract**

A Method and Apparatus for a Security System for Wireless Networks is described. The technique involves encryption and decryption at the Physical layer. It also develops a criterion for choosing the encryption/decryption methodology for a particular embodiment for communication systems typically using a Viterbi Decoder and describes how the difficult-to-invert property of the Viterbi Decoder can be utilized to provide security against known-plaintext attacks. Some candidate encryption/decryption methodologies satisfying the developed criterion are also discussed.

## Description

This invention relates to a method and apparatus for a security system.

In particular, this invention relates to a method and apparatus for a security system in wired or Wireless communication Networks.

Still particularly, this invention relates to a method and apparatus for an encryption system in security system in wired or Wireless communication Networks

In particular this invention relates to a novel way of enhancing Network Security. Still particularly, this invention relates to Network Security and in particular to a method for enhancing the security of Wired and Wireless Networks.

The prevailing security mechanism of Wireless Networks using stream ciphers is primarily based on encryption of the actual data (called plaintext) with a stream generated from a set of keys (called cipher). The basic encryption methodology is based on so-called "Vernam Ciphers" where the cipher generated from the keys is XOR-ed with the incoming plaintext data. This form of security is always prone to "key reuse" or "known plaintext attack". The basic property of "Vernam Ciphers" allows the cipher to be decoded from the encrypted data if the plaintext data is known. If the key is not changed frequently, hackers can use this information to first find out the cipher by sending a known plain-text data and then use it to decrypt subsequent data packets. Increasing the frequency of key change and using encryption algorithms that make finding out keys for cipher are suggested as possible ways of reducing security threat but obviously they are not foolproof.

The basic reason behind the easy implementation of "known plaintext attack" in the existing systems, is the fact that the encryption is done at the Media Access Control (MAC) layer, which normally is implemented in the software. A hacker with a promiscuous mode Network Interface Card (NIC) can always record the encrypted data and then analyze the recorded data to decrypt it off-line in the aforesaid manner. These systems, which use an XOR of the plain-text with a bit string, are vulnerable to chosen-plaintext crypt-analytic attack.

Finding out the key stream through "known plaintext attack" can also lead to other forms of hacking like "Data Forgery" attacks (replay and mimicking) and "Denial-of-Service" attacks.

In some of the wireless communication systems, block ciphers are used instead of stream ciphers. Though blocks ciphers like AES can provide a significant level of security against the prevailing attacks, it comes at the cost of more computational complexity and memory, which in turn can increase the cost, size or the power consumption of the wireless device.

Hence a need exists for denying "known plaintext attack" with minimal computational complexity, memory consumption and power consumption in order to enhance the security mechanism of Wireless Networks. The proposed invention tries to address this issue by employing Physical Layer Encryption.

### Summary of Invention

The key for enhancing security lies in the prevention of recording the data by a hacker using promiscuous mode NIC hardware and in using encryption methodologies that can address the aforesaid weakness of stream ciphers. These issues can be addressed in the following manner.

Firstly, in accordance with this invention, a novel concept is presented by which "known-plaintext" attacks can be prevented by providing a difficult-to-invert block between the "data recording point" of the hacker and the "data decryption point" at the receiver. A preferred difficult to invert block is a Viterbi decoder (or like error control decoders). The method and apparatus in accordance with this invention also does not degrade the communication performance if the encryption algorithms met certain criteria developed using theoretical analysis. Existing stream ciphering schemes can still be used with minor modifications or newer schemes can be designed based on the criterion developed.

Based on the criteria developed, certain alternative encryption algorithms are envisaged as alternatives. Here the cipher can be used to modify different physical layer baseband algorithm parameters. Since the plaintext data anyway gets transformed through these physical layer algorithms before being transmitted, modification of baseband algorithm parameters based on cipher can achieve an encryption equivalent. Such schemes make "known plaintext attacks" more costly for the hacker in terms of computational complexity without adding significant computational overload on the actual system.

Candidate sets of encryption algorithms envisaged in accordance with this invention which satisfy the proposed criteria and expand on top of the generic concept of Physical Layer Encryption include
- XOR using RC4
- XOR using PN sequence generator
- Scrambling
- Constellation Amplitude and Phase based Encryption

It should be noted that this list given above are illustrative and there are many Encryption algorithms, which satisfy the proposed criteria.

Even though the idea is developed using stream ciphers by way of example, it can be extended to block ciphers using similar concepts. This will further enhance the security of the block cipher based systems.

Even though this idea is presented in the context of Wireless Networks, the concept itself is generic in nature. Most of digital communication systems - wired or wireless use similar configurations where the proposed scheme can be applied. The main method of implementation of the feature of this invention is the idea that the encryption can be done at Baseband Radio level to provide better security.

The basis of the security enhancement lies in the facts that
- The hacker cannot access/modify the physical layer of the NIC without using costly custom-built PHY chipsets and hence recording of data by hacker at Physical Layer level is very costly.
- The introduction of a non-invertible signal processing block between hacker 'data recording point' and the "data decryption point" at the receiver makes "known plaintext attack" virtually impossible
- There exist a lot of candidate algorithms which when employed as the Encryption algorithm, does not degrade the communication performance of the proposed system.

Hence this scheme can potentially be applied to all such types of digital communication systems.

### STATEMENT OF THE INVENTION

According to this invention therefore there is provided a method for enhancing the security of encrypted transmission of information in a network communication system consisting of a physical [PHY] layer and a medium access control [MAC] layer, in which at the sender end the input to the MAC layer is the data that a user wants to transmit, which is passed to the PHY layer for transmission and at the receiver end, the received data is processed by the PHY and passed on to the MAC for passing on to higher layers, said method comprising the steps of
employing an encryption process at the sender end using a cipher generated by an algorithm, that is placed after an error control coder;
placing an error control decoder as a non-invertible block in the physical layer receive path at the receiver end, placed such that the input information to that block is not practically accessible for recording and,
placing a decryption block prior to the said non-invertible block, and the decryption is done on the information which is not practically accessible for recording.

Typically, the said non-invertible block does not have any direct role in the decryption process.

In accordance with a preferred embodiment of this invention, the encryption process at the sender end uses a stream cipher algorithm or a block cipher algorithm. These algorithms can either be existing ones or newly formulated.

Typically, the encryption process involves manipulating the physical characteristics of transmitted waveform in a manner dependent on the cipher, and the decryption is by a reverse process with the knowledge of the same cipher in a way so as to give no degradation in communication performance and involves a criterion such that the minimum distance between a received code words after decryption, prior to decoding, is greater than or equal to half of the minimum distance between corresponding transmitted code words.

The encryption process may involve a RC4 algorithm based encryption with XOR operator; a PN sequence generator based encryption with XOR operator; Scrambling in which a Key is used as a seed for the scrambling algorithm or Constellation Amplitude and Phase based Encryption in which a Key is used as a seed to generate random numbers, which in turn is used to vary the amplitude and phase of the modulation constellation.

### Brief description of the drawings

The invention will now be described with reference to the accompanying drawings in which are
Figure 1 is a block diagram of the prior art scheme showing the Physical [PHY] layers and the media access control [MAC] layer for the conventional stream cipher based encryption system;
Figure 2 is the scheme in accordance with this invention ;
Figure 3 shows the scheme of figure 2 using the RC4;
Figure 4 shows the scheme of this invention using a PN sequence generator;
Figure 5 is a graphical representation of the BER performance between the system of the prior art and in accordance with this invention ;

### DESCRIPTION OF THE PREFERRED EMBODIMENT

Referring to the drawings, the reference numerals in the drawings are self-explanatory.

### Traditional Stream Ciphering System

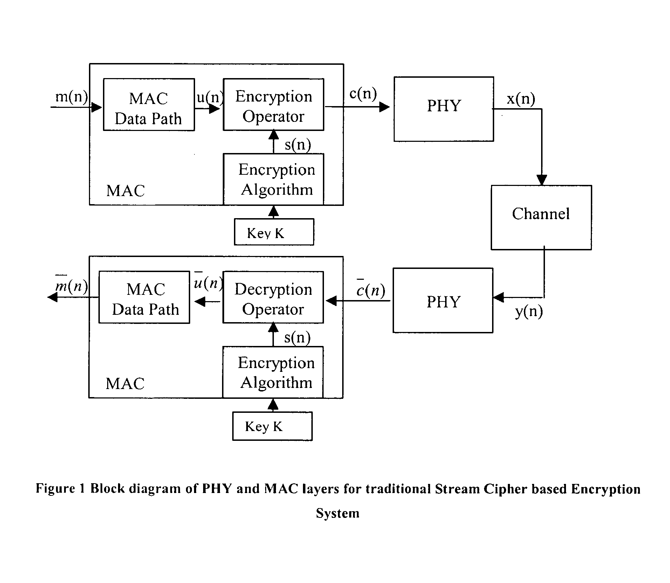

A high-level block diagram of the physical (PHY) and medium access control (MAC) layers for a stream ciphering system is shown in Figure 1 of the accompanying drawings. The input to the MAC layer is the data that the user wants to transmit, also called plain text. The encryption process occurs at the MAC layer and the output of the MAC is encrypted data, also called cipher text, which is passed to the PHY layer for transmission. At the receiver end, the data is processed by the PHY and the estimate of the transmitted data (cipher text) is obtained. The PHY performs a parity check on the decoded data and if there is a mismatch the packet is discarded. The cipher text is passed on to the MAC. The MAC decrypts the data and passes it to the higher layers.

If the input to the MAC is represented as *m*(*n*) (n is the sample number). After passing through the MAC data path, the input to the encryption block is *u*(*n*). The output of the MAC is the ciphertext, i.e., *c(n) = u(n) ⊗ s(n).* Here ⊗ denotes the ciphering operation and *s(n)* is the cipher generated from the key K using the Encryption Algorithm. The PHY layer encodes the ciphertext using a channel encoder and transmits the same. The output of the PHY layer is denoted as *x(n)*.

At the receiver the received sequence is *y(n) = x(n) + n(n) ,* here *n(n)* denotes additive white Gaussian noise. The channel decoder obtains an estimate of *x(n)* from *y(n)* (denoted as *c̅*(*n*))*. c̅*(*n*) is deciphered to obtain *u̅(n)* using the Decryption operator. The other input to the Decryption operator is the cipher *s(n)* that is generated by the same Encryption Algorithm as used in the transmitter from key K.

A plaint text attack in this system is based on a known *u(n) .* Here the output of the PHY at the receiver, *c̅*(*n*)*,* is used along with the known *u(n)* to obtain keystream *s(n).*

### Limitations of the traditional stream ciphering system

In the receive process, the incoming ciphertext is passed on from the PHY to MAC layer based on the success of an integrity check like CRC, and this information is without errors except with a very low probability (when the parity check fails in spite of there being errors). This implies the information transferred from the PHY to MAC is almost always correct. With the aid of a network interface card (NIC) one can easily obtain the output of the PHY layer at the receiver end. As a result, the correct ciphertext can be easily obtained at the receiver end. In addition, if the plain text input at the transmitter is also known, the scheme is susceptible to plain text attacks.

In most of the existing wireless systems, the encryption operator is an XOR, which is a "Vernam Cipher". By the very basic properties of the Vernam Ciphers, it is very easy to obtain cipher *s(n)* if *x̅(n)* and *u(n)* are known. The more difficult task is to find out the key K from cipher *s*(*n*), but this also can be achieved within reasonable complexity for popular encryption algorithms used for Wireless Communication like RC4 etc.

### The Scheme in accordance with this invention

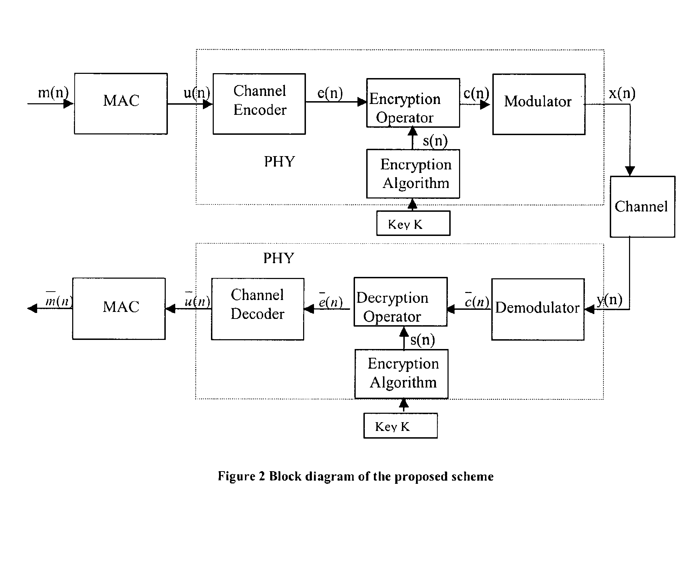

Given the ease of accessing the cipher text in the traditional scheme, the aim is to make accessing more difficult in the scheme in accordance with this invention. The block diagram of the scheme is shown in Figure 2 of the accompanying drawings. The input and output of the MAC are represented as *m(n)* and *u*(*n*) respectively. u(n) is channel coded in the PHY and the output of the channel encoder is denoted as *e*(*n*) . Channel encoder output is ciphered to obtain the ciphertext, i.e., *c(n)* = *e*(*n*)*⊗s*(*n*)*.* Here ⊗ denotes the ciphering operation and *s(n)* is the cipher. Here the output of the PHY layer after modulation is denoted as *x(n)*. Here the received data sequence is denoted as *y(n)* = *x(n)* + *n(n)* , where *n(n)* is the additive white Gaussian noise.

The most significant difference of the scheme shown in figure 2 as compared to the traditional scheme shown in figure 1 is that the encryption is applied in the PHY layer. Further, the decryption is performed after a non-invertible (not trivial to invert) block such as a channel decoder. The plain text from the MAC is passed to the PHY layer. The data is first channel encoded before being fed into the encryption block. It is important to note that the encrypted block need not be a valid channel codeword. The encryption and modulator block can be merged into a single block depending on the encryption methodology. At the receiver, the data is demodulated and decrypted before passing to the MAC. As before the data is transmitted to the MAC only if the packet satisfies the parity check.

The performance of the system depends on the complexity of obtaining the input to the channel decoder given the output. In the following section we analyze this system assuming that channel decoder is the Viterbi algorithm and suggest the criteria for choosing the encryption methodology. If the channel decoder was based on some other algorithm a separate analysis is necessary. However, it should be noted that similar kind of analysis can easily be extended to other channel encoding/decoding schemes and the proposed encryption system can be applied to all such systems. The Viterbi Decoder has been chosen in the preferred embodiment purely for illustrative purposes.

### Criteria for choosing the encryption methodology

The performance of the communication system depends on the minimum distance between the decrypted received vectors. The channel encoder guarantees a minimum distance between any two code words. The performance of the communication system depends on the minimum distance between the transmitted code words. The received encrypted code word at the receiver is denoted *as y(n),* where *y(n)* = *c(n)* + *n(n).* Here one is looking for conditions on the encryption scheme so that the performance of the proposed scheme and the traditional scheme remains same.

The BER of the proposed scheme and the traditional scheme must be comparable. The BER depends on the distance between the decrypted *y*(*n*) and transmitted codeword *c(n) .* It is important to note that many decryption schemes has memory and therefore leads to error propagation. For the performance of the modified scheme to remain the same as the traditional scheme the number of errors in the decrypted sequence (including errors due to the channel and error propagation of these errors during decryption) is less than half the minimum distance of the code. If there are more errors than half the minimum distance of the code, the number of errors introduced by error propagation is not important.

### Candidate Encryption Methodologies

Examples of encryption schemes where there is no degradation in performance include all encryption schemes without memory. These include all single symbol level encryption techniques like scrambling, varying the phase of the modulated symbols etc. and also the traditional XOR based encryption systems. However it should be noted that candidate Encryption methodologies are not limited to the examples given below and the examples are given purely for illustrative purpose:
1. RC4 algorithm based encryption with XOR operator
2. PN sequence generator based encryption with XOR operator
3. Scrambling - The Key can be used as seed to the scrambling algorithm
4. Constellation Amplitude and Phase based Encryption - The Key can be used as a seed to generate random numbers, which in turn can be used to vary the amplitude and phase of the modulation constellation.
   Out of the list of Encryption methodologies, two cases are explained in detailed below by way of exemplification for illustrative purposes and do not in any way limit the scope and ambit of this invention.

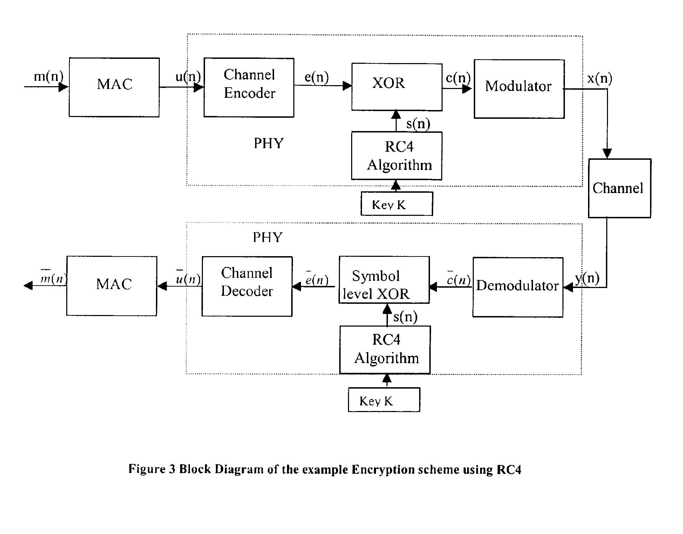

Figure 3 is an example, which depicts a block diagram of how the encryption scheme in accordance with this invention can be implemented using RC4.

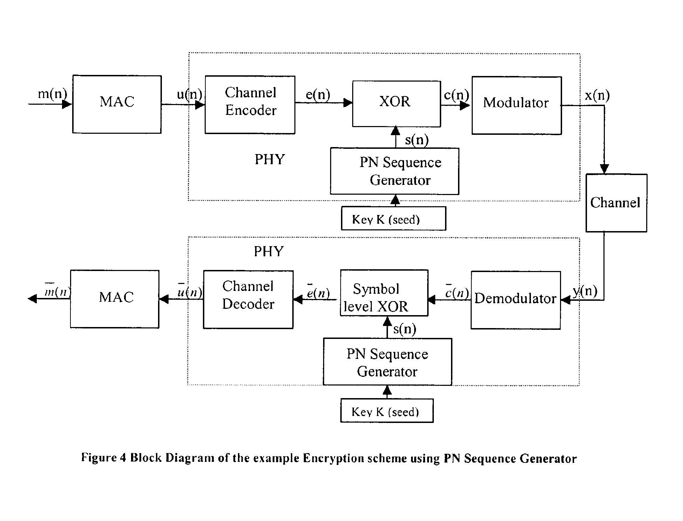

Figure 4, gives another example of how the encryption scheme can also be implemented by using a simple PN sequence generator instead of RC4 as the encryption algorithm and XOR as the encryption operator.

It should be noted that in both Figure 3 and Figure 4, a special block called symbol level XOR is used as the decryptor operator. This is needed because of the fact that for soft-decision Viterbi decoder, the input to the Viterbi decoder is at a symbol level. By symbol level XOR, is meant that one needs to pass the symbol as it is if the keystream s(n) is 0 and invert the symbol if the keystream s(n) is 1.

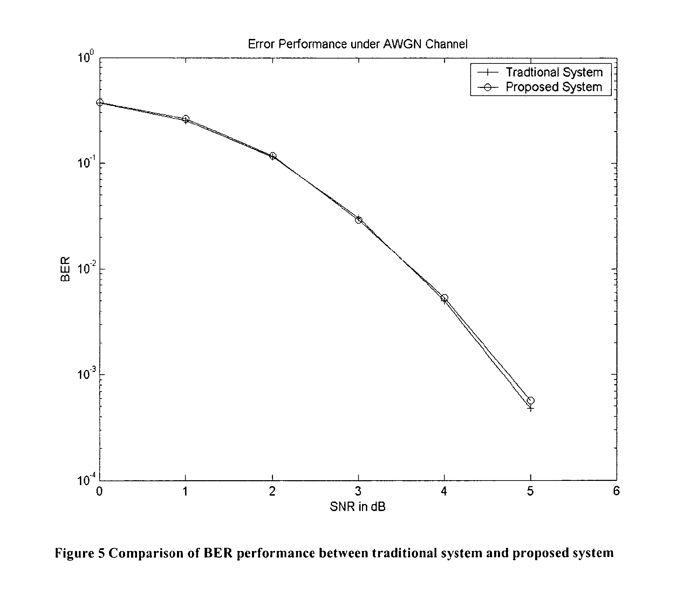

Figure 5 gives the comparison of BER performance for a traditional system with that of the proposed system (as described in Figure 4) based on simulation study. The parameters for simulation were as follows:
**Convolutional Encoder:** Rate ½, Constraint Length 7, G₀ = 171(octal), Gₗ = 133(octal)
**Viterbi Decoder**: Traceback length 96, soft decision
**Modulation:** Standard BPSK
**Channel:** AWGN

### Applicability of the scheme in accordance with this invention, for block ciphering systems:

Without any loss of generality, the same concept of moving the encryption block after the Convolutional encoder so that there exists a difficult-to-invert block between the recording point and the decryption point at the receiver, can be extended to block ciphering systems also. The criterion for designing the encryption algorithm can be developed in a similar way and suitable block ciphering systems can be devised accordingly. It should be noted that by applying the proposed idea to block ciphering systems, one can further increase the security level of such systems.

### Applicability of the scheme in accordance with this invention under Fading scenarios:

The analysis for development of the criterion assumes an AWGN channel. But most of the practical wireless systems need to deal with fading channels. It should be noted that for handling fading channel scenarios, the receiver employs channel equalization. If the decryptor at the receiver for the proposed scheme resides after the channel equalization blocks, then the noise arriving at the input of the decryptor due to "imperfectness of the channel equalization" can still be treated as additive and hence a similar kind of treatment for the development of the encryption criteria holds.

### Complexity of breaking the security of the system in accordance with this invention

The system in accordance with this invention increases the computational complexity of breaking into the security of the system. The complexity of breaking into the system will be the summation of the complexity of the encryption algorithm (as with the conventional system) and the complexity of invertiblity of the error control decoding block (or any other difficult-to-invert block in general). Specifically, if Viterbi Decoder is used as the difficult-to-invert block, the following analysis holds for the complexity of the inversion.

Let the length of the ciphertext be N and let the cardinality of the alphabet set over which the transmitted data is constructed be M. Then for any given output of the Viterbi decoder there are M^{N} inputs which would have given this output and hence the complexity of the inversion is also of the same order.

### Advantages of the Scheme in accordance with this invention

The main advantage of the scheme in accordance with this invention is that it is now not possible to obtain the cipher with a simple NIC. The output of the channel encoder is a code word. The encryption process may result in a sequence that is not a code word. As a result at the receiver, output of the channel decoder cannot be passed through the channel encoder to obtain the cipher.

Here the plain text attack at the receiver with a known input sequence to the channel encoder at the transmitter is hard. The complexity of the attack is based on the channel decoder. Given the output of the channel decoder it is hard to obtain the input since the channel decoder in general is a many to one function. Here given the output of the Viterbi decoder one can trace the path through the trellis. But there are several sequences, which are close to the decoded sequence. This makes the plain text attack hard.

Another advantage of the scheme lies in the implementation complexity. In traditional systems, getting the cipher s(n) using known-plaintext attack is always easy. Hence one needs to employ more and more complex encryption algorithms in order to make the process of getting Key K from s(n) difficult. Traditional systems try to achieve this by employing complex stream ciphering algorithms or by using block-ciphering algorithms. In either case, the implementation complexity of the encryption system is increased, which in turn increases the size, cost and the power consumption. In the age of battery powered small hand-held devices, this increase may have a significant impact. In the scheme in accordance with this invention, getting the cipher s(n) itself is very difficult through known-plaintext attack. Hence one can employ simpler algorithms for generating cipher s(n) from the key K, which in turn can reduce the implementation complexity.

While considerable emphasis has been placed herein on structures and structural interrelationships between component parts of the preferred embodiments, it will be appreciated that many embodiments can be made and that many changes can be made in the preferred embodiments without departing from the principals of the invention. These and other changes in the preferred embodiment as well as other embodiments of the invention will be apparent to those skilled in the art from the disclosure herein, whereby it is to be distinctly understood that the foregoing descriptive matter is to be interpreted merely as illustrative of the invention and not as a limitation.

## Claims

1. A method for enhancing the security of encrypted transmission of information in a network communication system consisting of a physical [PHY] layer and a medium access control [MAC] layer, in which at the sender end the input to the MAC layer is the data that a user wants to transmit, which is passed to the PHY layer for transmission and at the receiver end, the received data is processed by the PHY and passed on to the MAC for passing on to higher layers, said method comprising the steps of
employing an encryption process at the se nder end using a cipher generated by an algorithm that is placed after an error control coder;
placing an error control decoder as a non-invertible block in the physical layer receive path at the receiver end, placed such that the input information to that block is not practically accessible for recording and,
placing a decryption block prior to the said non-invertible block, and the decryption is done on the information which is not practically accessible for recording.

2. A method for enhancing the security of encrypted transmission of information in a network communication system as claimed in claim 1, in which the said non-invertible block does not have any direct role in the decryption process.

3. A method for enhancing the security of encrypted transmission of information in a network communication system as claimed in claim 1, in which the encryption process at the sender end uses a stream cipher algorithm.

4. A method for enhancing the security of encrypted transmission of information in a network communication system as claimed in claim 1, in which the encryption process at the sender end uses a block cipher algorithm.

5. A method for enhancing the security of encrypted transmission of information in a network communication system as claimed in claim 1, in which the encryption process involves manipulating the physical characteristics of transmitted waveform in a manner dependent on the cipher, and the decryption is by a reverse process with the knowledge of the same cipher.

6. A method for enhancing the security of encrypted transmission of information in a network communication system as claimed in claim 1, in which the encryption process involves a criterion such that the minimum distance between a received code words after decryption, prior to decoding, is greater than or equal to half of the minimum distance between corresponding transmitted code words.

7. A method for enhancing the security of encrypted transmission of information in a network communication system as claimed in claim 1, in which the encryption process involves RC4 algorithm based encryption.

8. A method for enhancing the security of encrypted transmission of information in a network communication system as claimed in claim 1, in which the encryption process involves a PN sequence generator based encryption.

9. A method for enhancing the security of encrypted transmission of information in a network communication system as claimed in claim 1, in which the encryption process involves Scrambling in which a Key is used as a seed for the scrambling algorithm.

10. A method for enhancing the security of encrypted transmission of information in a network communication system as claimed in claim 1, in which the encryption process involves Constellation Amplitude and Phase based Encryption in which a Key is used as a seed to generate random numbers, which in turn is used to vary the amplitude and phase of the modulation constellation.
